# EUROPEAN PATENT SPECIFICATION

(11) **EP 3 828 238 B1**
(45) Date of publication and mention of the grant of the patent: **31.01.2024**
(21) Application number: 19840722.3
(22) Date of filing: 24.07.2019
(51) Int. Cl.: C08L 83/08, B32B 25/20, C08K 3/36, C08L 83/07

(54) **SILICONE RUBBER COMPOSITION AND PRODUCTION METHOD FOR LAMINATE OF FLUOROSILICONE RUBBER AND SILICONE RUBBER**
SILIKONKAUTSCHUKZUSAMMENSETZUNG UND VERFAHREN ZUR HERSTELLUNG EINES LAMINATS AUS FLUORSILIKONKAUTSCHUK UND SILIKONKAUTSCHUK
COMPOSITION DE CAOUTCHOUC DE SILICONE ET PROCÉDÉ DE PRODUCTION DE STRATIFIÉ DE CAOUTCHOUC DE SILICONE FLUORÉE ET CAOUTCHOUC DE SILICONE

(30) Priority: 25.07.2018 JP 2018139657
(43) Date of publication of application: 02.06.2021
(73) Proprietor: Dow Toray Co., Ltd., Tokyo 140-8617 (JP)
(72) Inventor: HASEGAWA, Chiichiro, Awara-shi, Fukui 919-0603 (JP); ISHIGAMI, Naoya, Ichihara-shi, Chiba 299-0108 (JP)
(74) Representative: Murgitroyd & Company
(86) International application number: PCT/JP2019/029109
(87) International publication number: WO 2020/022407

(56) References cited:
- EP-A1- 2 700 677
- EP-A2- 1 728 830
- JP-A- H0 693 184
- JP-A- 2000 248 183
- JP-A- 2002 194 220
- JP-A- 2002 212 425
- JP-A- 2008 031 227
- JP-A- 2008 540 754
- JP-A- 2010 126 712
- JP-A- 2015 502 431
- JP-A- 2016 151 834

## Description

### [TECHNICAL FIELD]

The present invention relates to a silicone rubber composition, and a method for manufacturing a laminate of a fluorosilicone rubber and a silicone rubber using the same.

### [BACKGROUND ART]

Although a laminate of a fluorosilicone rubber formed of an organopolysiloxane which substantially contains a fluoroalkyl group such as a 3,3,3-trifluoropropyl group and a silicone rubber formed of an organopolysiloxane which substantially does not have a fluoroalkyl group has been used in a variety of applications, because the adhesion between the fluorosilicone rubber and the silicone rubber is insufficient, allowing the contact interface thereof to be easily peeled, various methods have been proposed for solving this problem.

Examples of proposed methods for manufacturing a laminate formed of fluorosilicone rubber and silicone rubber include: a method involving blending a copolymer of dimethylsiloxane and methyl(3,3,3-trifluoropropyl)siloxane capped at a molecular chain terminal with a silanol group and having a viscosity of 100 mPa·s or less at 25°C into either one or both of a rubber composition which forms a fluorosilicone rubber and a silicone rubber, and adhering each other (see Patent Document 1); a method involving molding an organic peroxide curing type fluorosilicone rubber composition containing a hydrosilylation reaction catalyst or an organopolysiloxane having at least 2 silicon atom-bonded hydrogen atoms per molecule, along with an organic peroxide curing type dimethylsilicone rubber composition containing a hydrosilylation reaction catalyst or an organopolysiloxane having at least 2 silicon atom-bonded hydrogen atoms per molecule, to form the desired shape, then carrying out a hydrosilylation reaction with these compositions contacted so as to cure them (see Patent Document 2); a method using a fluorosilicone rubber composition which comprises an organopolysiloxane having an alkenyl group and a trifluoropropyl group, a silica based filler, an organohydrogenpolysiloxane having methyl(trifluoropropyl)siloxane units, methylhydrogensiloxane units, and further methylvinylsiloxane units, and an organic peroxide (see Patent Document 3); a method involving, when adhering a fluorosilicone rubber composition and a dimethylsilicone rubber composition by covulcanization, blending into either one or both thereof, an adhesive aid which contains a reinforcing silica having a BET specific surface area of 250 m²/g or more along with an organohydrogenpolysiloxane having methyl(3,3,3-trifluoropropyl)siloxane units, methylhydrogensiloxane units, and dimethylvinylsiloxane units (see Patent Document 4); a method using a silicone rubber composition which comprises an organopolysiloxane, a silica based filler, an organohydrogenpolysiloxane having methyl(trifluoropropyl)siloxane units, methylhydrogensiloxane units, and further vinyl group-containing siloxane units, and an organic peroxide (see Patent Document 5); and a method involving curing an organic peroxide curing type fluorosilicone rubber composition containing a hydrosilylation reaction catalyst or an organopolysiloxane having at least 2 silicon atom-bonded hydrogen atoms per molecule, along with an organic peroxide curing type silicone rubber composition containing a hydrosilylation reaction catalyst or an organopolysiloxane having at least 2 silicon atom-bonded hydrogen atoms per molecule, via a mixed composition of the fluorosilicone rubber composition and the silicone rubber composition, with these compositions contacted (see Patent Document 6).

Unfortunately, even in the laminate of fluorosilicone rubber and silicone rubber produced by these manufacturing methods, the adhesion between the fluorosilicone rubber and the silicone rubber was not sufficient.

### [Prior Art Documents]

### [Patent Documents]

Patent Document 1: JP 2006-328303 A
Patent Document 2: JP 2008-540754 T
Patent Document 3: JP 2010-126712 A
Patent Document 4: JP 2011-093996 A
Patent Document 5: JP 2013-103963 A
Patent Document 6: JP 2015-502431 T

### [SUMMARY OF THE INVENTION]

### [Problems to be Solved by the Invention]

An object of the present invention is to provide a silicone rubber composition which forms a silicone rubber to which a fluorosilicone rubber composition adheres well. Moreover, another object of the present invention is to provide a method for manufacturing a laminate in which a fluorosilicone rubber layer and a silicone rubber layer adhere well.

### [Means for Solving the Problems]

The silicone rubber composition of the present invention comprises the following components (A) to (C):
(A) 100 parts by mass of an organopolysiloxane having at least 2 alkenyl groups per molecule, and not having fluoroalkyl groups or having fluoroalkyl groups in a proportion of less than 20 mol% of all silicon atom-bonded organic groups;
(B) an organopolysiloxane having at least 2 silicon atom-bonded hydrogen atoms per molecule along with fluoroalkyl groups in a proportion of at least 5 mol% of all silicon atom-bonded organic groups, in an amount that the silicon atom-bonded hydrogen atoms in component (B) exceeds 1 mol with respect to 1 mol of the total alkenyl groups in component (A); and
(C) a hydrosilylation reaction catalyst in a catalytic amount.

In the present composition, component (B) is preferably an organopolysiloxane represented by the average unit formula:

[HR¹₂SiO_{1/2}]ₓ(R^{f}SiO_{3/2})_{y}

wherein, R¹ is the same or different monovalent hydrocarbon group having 1 to 20 carbon atoms without an aliphatic unsaturated bond, R^{f} is the same or different fluoroalkyl group, and each "x" and "y" is a number satisfying: 0 < x < 1,0 < y < 1, and x + y = 1.

The present composition may further comprise: a fine powdery silica based filler, in an amount of 5 to 200 parts by mass with respect to 100 parts by mass of component (A).

The method of the present invention for manufacturing a laminate of a fluorosilicone rubber and a silicone rubber, comprises the following Steps (1) to (3):
(1) curing a silicone rubber composition comprising the following components (A) to (C):
   (A) 100 parts by mass of an organopolysiloxane having at least 2 alkenyl groups per molecule, and not having fluoroalkyl groups or having fluoroalkyl groups in a proportion of less than 20 mol% of all silicon atom-bonded organic groups;
   (B) an organopolysiloxane having at least 2 silicon atom-bonded hydrogen atoms per molecule along with fluoroalkyl groups in a proportion of at least 5 mol% of all silicon atom-bonded organic groups, in an amount that the silicon atom-bonded hydrogen atoms in component (B) exceeds 1 mol with respect to 1 mol of the total of alkenyl groups in component (A); and
   (C) a hydrosilylation reaction catalyst in a catalytic amount,
(2) laminating a fluorosilicone rubber composition comprising the following components (D) and (E) on a surface of a silicone rubber produced in Step (1) above:
   (D) 100 parts by mass of (D1) an organopolysiloxane having at least 1 alkenyl group per molecule along with fluoroalkyl groups in a proportion of at least 20 mol% of all silicon atom-bonded organic groups, or a mixture of components (D1) and (D2) an organopolysiloxane having at least 1 alkenyl group per molecule, and not having fluoroalkyl groups or having fluoroalkyl groups in a proportion of less than 20 mol% of all silicon atom-bonded organic groups; and
   (E) an effective amount of a curing agent, and
(3) curing the fluorosilicone rubber composition laminated in Step (2) above.

In the manufacturing method of the present invention, component (B) is preferably an organopolysiloxane represented by the average unit formula:

[HR¹₂SiO_{1/2}]ₓ(R^{f}SiO_{3/2})_{y}

wherein, R¹ is the same or different monovalent hydrocarbon group having 1 to 20 carbon atoms without an aliphatic unsaturated bond, R^{f} is the same or different fluoroalkyl group, and each "x" and "y" is a number satisfying: 0 < x < 1,0 < y < 1, and x + y = 1.

Furthermore, in the manufacturing method of the present invention, the silicone rubber composition preferably further comprises: a fine powdery silica based filler, in an amount of 5 to 200 parts by mass with respect to 100 parts by mass of component (A).

Furthermore, another method of the present invention for manufacturing a laminate of a fluorosilicone rubber and a silicone rubber, comprises the following Steps (1') to (2'):
(1') producing a laminate of a fluorosilicone rubber composition layer and a silicone rubber composition layer by laminating a silicone rubber composition comprising the following components (A) to (C):
   (A) 100 parts by mass of an organopolysiloxane having at least 2 alkenyl groups per molecule, and not having fluoroalkyl groups or having fluoroalkyl groups in a proportion of less than 20 mol% of all silicon atom-bonded organic groups;
   (B) an organopolysiloxane having at least 2 silicon atom-bonded hydrogen atoms per molecule along with fluoroalkyl groups in a proportion of at least 5 mol% of all silicon atom-bonded organic groups, in an amount that the silicon atom-bonded hydrogen atoms in component (B) exceeds 1 mol with respect to 1 mol of the total alkenyl groups in component (A); and
   (C) a hydrosilylation reaction catalyst in a catalytic amount,
      and a fluorosilicone rubber composition comprising the following components (D) and (E):
   (D) 100 parts by mass of (D1) an organopolysiloxane having at least 1 alkenyl group per molecule along with fluoroalkyl groups in a proportion of at least 20 mol% of all silicon atom-bonded organic groups, or a mixture of components (D1) and (D2) an organopolysiloxane having at least 1 alkenyl group per molecule, and not having fluoroalkyl groups or having fluoroalkyl groups in a proportion of less than 20 mol% of all silicon atom-bonded organic groups; and (E) an effective amount of a curing agent, and
(2') curing a fluorosilicone rubber composition layer and a silicone rubber composition layer of a laminate produced in Step (1') above.

In the manufacturing method of the present invention, component (B) is preferably an organopolysiloxane represented by the average unit formula:

[H R¹₂SiO_{1/2}]ₓ(R^{f}SiO_{3/2})_{y}

wherein, R¹ is the same or different monovalent hydrocarbon group having 1 to 20 carbon atoms without an aliphatic unsaturated bond, R^{f} is the same or different fluoroalkyl group, and each "x" and "y" is a number satisfying: 0 < x < 1,0 < y < 1, and x + y = 1.

Furthermore, in the manufacturing method of the present invention, the silicone rubber composition preferably further comprises: a fine powdery silica based filler, in an amout of 5 to 200 parts by mass with respect to 100 parts by mass of component (A).

### [Effects of the Invention]

The silicone rubber composition of the present invention enables the formation of a silicone rubber to which a fluorosilicone rubber composition adheres well. Furthermore, the manufacturing method of the present invention enables the manufacture of a laminate in which a fluorosilicone rubber layer and a silicone rubber layer adhere well.

### [BRIEF DESCRIPTION OF THE DRAWINGS]

FIG. 1 is a cross sectional view of a silicone rubber roll which is one example of a laminate of a fluorosilicone rubber and a silicone rubber produced by the manufacturing method of the present invention.
FIG. 2 is a perspective view of a rubber sheet which is one example of a laminate of a fluorosilicone rubber and a silicone rubber produced by the manufacturing method of the present invention.
FIG. 3 is a perspective view of a rubber sheet which is another example of a laminate of a fluorosilicone rubber and a silicone rubber produced by the manufacturing method of the present invention.

### [Mode for Carrying out the Invention]

### [Silicone rubber composition]

Component (A) is an organopolysiloxane serving as a main agent of the present composition and having at least 2 alkenyl groups per molecule. Exemplary alkenyl groups in component (A) include alkenyl groups having 2 to 12 carbon atoms such as vinyl groups, allyl groups, butenyl groups, and hexenyl groups, with vinyl groups preferable. Furthermore, component (A) does not have fluoroalkyl groups or has fluoroalkyl groups in a proportion of less than 20 mol% of all silicon atom-bonded organic groups. Exemplary fluoroalkyl groups that may be contained in component (A) include fluoroalkyl groups having 3 to 12 carbon atoms such as 3,3,3-trifluoropropyl groups, 4,4,4,3,3-pentafluorobutyl groups, 5,5,5,4,4,3,3-heptafluoropentyl groups, 6,6,6,5,5,4,4,3,3-nonafluorohexyl groups, and 7,7,7,6,6,5,5,4,4,3,3-undecafluoroheptyl groups, with 3,3,3-trifluoropropyl groups, 4,4,4,3,3-pentafluorobutyl groups, and 5,5,5,4,4,3,3-heptafluoropentyl groups preferable. Furthermore, exemplary groups bonded to silicon atoms other than the alkenyl groups and fluoroalkyl groups in component (A) include monovalent hydrocarbon groups having 1 to 20 carbon atoms, preferably 1 to 8 carbon atoms, with specific examples thereof including: alkyl groups such as methyl groups, ethyl groups, propyl groups, and butyl groups; cycloalkyl groups such as cyclohexyl groups; aryl groups such as phenyl groups and tolyl groups; and aralkyl groups such as benzyl groups and phenethyl groups, with alkyl groups and particularly methyl groups preferable.

While the molecular structure of such component (A) is not limited, examples thereof include a linear structure, a partially branched linear structure, and a branched structure. Furthermore, while the viscosity of component (A) is not limited thereto, it is preferably a raw rubber-like substance from a liquid substance having a viscosity of at least 1 Pa·s at 25°C. The liquid substance is particularly preferably a liquid having a viscosity at 25°C of at least 10 Pa·s, and at most 1,000 Pa·s. Note that the viscosity at 25°C of component (A) can be measured by a rotational viscometer in accordance with JIS K7117-1. In contrast, specific examples of the raw rubber form include a raw rubber having a Williams plasticity at 25°C of 100 to 800 set forth in JIS K 6249, a raw rubber having a Williams plasticity of 100 to 400.

Component (B) is an organopolysiloxane serving as a crosslinking agent of the present composition and having at least 2 silicon atom-bonded hydrogen atoms per molecule along with fluoroalkyl groups in a proportion of at least 5 mol% of all silicon atom-bonded organic groups. Exemplary fluoroalkyl groups in component (B) may include fluoroalkyl groups having 3 to 12 carbon atoms such as 3,3,3-trifluoropropyl groups, 4,4,4,3,3-pentafluorobutyl groups, 5,5,5,4,4,3,3-heptafluoropentyl groups, 6,6,6,5,5,4,4,3,3-nonafluorohexyl groups, and 7,7,7,6,6,5,5,4,4,3,3-undecafluoroheptyl groups, with 3,3,3-trifluoropropyl groups, 4,4,4,3,3-pentafluorobutyl groups, and 5,5,5,4,4,3,3-heptafluoropentyl groups preferable. The proportion of the fluoroalkyl group in component (B) is at least 5 mol%, preferably at least 10 mol%, or at least 15 mol%, and at most 70 mol%, at most 60 mol%, at most 50 mol%, or at most 40 mol%, of all silicon atom-bonded organic groups. Note that the proportion of the fluoroalkyl group can be any range obtained by combining the abovementioned lower limits and upper limits. This is because, when the proportion of the fluoroalkyl groups in component (B) is the abovementioned lower limit or more, the adhesion of the fluorosilicone rubber composition to the obtained silicone rubber is improved; in contrast, when the proportion is the abovementioned upper limit or less, the mechanical properties of the obtained silicone rubber composition are favorable. Exemplary groups bonded to silicon atoms other than the hydrogen atoms and fluoroalkyl groups in component (B) include monovalent hydrocarbon groups not having an aliphatic unsaturated bond and having 1 to 20 carbon atoms, preferably 1 to 8 carbon atoms, with specific examples thereof including: alkyl groups such as methyl groups, ethyl groups, propyl groups, and butyl groups; cycloalkyl groups such as cyclohexyl groups; aryl groups such as phenyl groups and tolyl groups; and aralkyl groups such as benzyl groups and phenethyl groups, with alkyl groups and particularly methyl groups preferable.

While the molecular structure of component (B) is not limited, examples thereof include a linear structure, partially branched linear structure, branched structure, network structure, and cyclic structure, with mixtures of two or more types having these molecular structures capable of being used. Such component (B) is preferably an organopolysiloxane represented by the average unit formula:

[HR¹₂SiO_{1/2}]ₐ(R^{f}SiO_{3/2})_{b}

In the formula, R¹ is the same or different monovalent hydrocarbon group having 1 to 20 carbon atoms and not having an aliphatic unsaturated bond, with examples thereof including the same groups as described above, with alkyl groups and particularly methyl groups preferable.

Furthermore, in the formula, R^{f} represents the same or different fluoroalkyl group, with examples thereof including the same groups as described above.

Furthermore, in the formula, each "x" and "y" is a number satisfying: 0 < x < 1, 0 < y < 1, and x + y = 1. Furthermore, a proportion of R^{f} with respect to the total of R¹ and R^{f} per molecule is preferably at least 5 mol%, at least 10 mol%, or at least 15 mol%, and at most 70 mol%, at most 60 mol%, at most 50 mol%, or at most 40 mol%. Note that the proportion of R^{f} can be any range obtained by combining the abovementioned lower limits and upper limits.

The content of component (B) is an amount such that the amount of silicon atom-bonded hydrogen atoms in component (B) exceeds 1 mol, is preferably 1.5 mol or more, 2 mol or more, 2.5 mol or more, 3 mol or more, or 3.5 mol or more, and 30 mol or less, 20 mol or less, 15 mol or less, or 10 mol or less, with respect to 1 mol of the total of alkenyl groups in component (A). Note that the content of component (B) can be any range obtained by combining the abovementioned lower limits and upper limits. This is because, when the content of component (B) is the abovementioned lower limit range or more, the adhesion of the fluorosilicone rubber composition to the obtained silicone rubber is favorable; in contrast, when the content is the abovementioned upper limit range or less, the adhesion between the obtained fluorosilicone rubber and the silicone rubber is favorable in the laminate body after exposure in a high temperature environment.

Component (C) is a hydrosilylation reaction catalyst for promoting curing of the present composition. Examples of component (C) include platinum based catalysts, palladium based catalysts, and rhodium based catalysts, with platinum based catalysts preferable. Examples of this platinum based catalyst include chloroplatinic acid, an alcohol solution of chloroplatinic acid, a platinum-carbonyl complex, a platinum-alkenyl siloxane complex, a platinum-olefin complex, and a microcapsulated catalyst with a capsule made from an acrylic resin, polycarbonate resin, or a silicone resin in which the aforementioned platinum catalyst is dispersed or contained and which should have a softening point within a range of 40 to 170°C, with a platinum-alkenyl siloxane complex particularly preferable in terms of good compatibility with component (A). In this platinum-alkenylsiloxane complex, exemplary alkenyl siloxanes may include 1,3-divinyltetramethyldisiloxane and 1,1,3,3-tetravinyldimethyldisiloxane.

The content of component (C) is a catalytic amount which promotes curing of the present composition and is specifically an amount in which the catalyst metals in component (C) are, in mass units, within a range of 0.1 to 1,000 ppm, within a range of 0.1 to 500 ppm, or within a range of 0.1 to 250 ppm, with respect to the present composition. This is because, when the content of component (C) is the abovementioned lower limit range or more, curing of the present composition is sufficiently promoted; in contrast, when the content is the abovementioned upper limit range or less, problems such as coloring of the obtained silicone rubber are less likely to occur.

The present composition may contain silica fine powder in order to improve the mechanical properties of the obtained silicone rubber. Examples of this silica fine powder include dry method silica such as fumed silica, along with wet method silica such as precipitated silica, and furthermore, fine powdery silica hydrophobized with an organosilicon compound such as organosilane, hexaorganodisilazane, diorganopolysiloxane, and diorganocyclopolysiloxane. While the BET specific surface area of the silica fine powder is not limited, it is preferably within a range of 50 m²/g to 400m²/g, or 100 to 400 m²/g.

While the content of the silica fine powder is not limited, it is preferably 5 parts by mass or more with respect to 100 parts by mass of component (A) due to the favorable mechanical properties of the obtained silicone rubber, and preferably 200 parts by mass or less with respect to 100 parts by mass of component (A) due to the favorable moldability of the obtained silicone rubber composition.

The present composition may contain a reaction inhibitor in order to adjust the curing speed. Examples of this reaction inhibitor include: alkyne alcohols such as 2-methyl-3-butyn-2-ol, 3,5-dimethyl-1-hexyn-3-ol, 3-methyl-1-pentyn-3-ol, 2-phenyl-3-butyn-2-ol, 1-ethynyl-1-cyclohexanol, 2-ethynylisopropanol, and 2-ethynylbutan-2-ol; silylated acetylene alcohols such as trimethyl(3,5-dimethyl-1-hexyn-3-oxy)silane, dimethylbis(3-methyl-1-butynoxy)silane, methylvinylbis(3-methyl-1-butyn-3-oxy)silane, and [(1,1-dimethyl-2-propynyl)oxy]trimethylsilane; enyne compounds such as 2-isobutyl-1-buten-3-yne, 3,5-dimethyl-3-hexen-1-yne, 3-methyl-3-penten-1-yne, 3-methyl-3-hexen-1-yne, 1-ethynylcyclohexene, 3-ethyl-3-buten-1-yne, and 3-phenyl-3-buten-1-yne; unsaturated carboxylic acid esters such as diallylmaleate, dimethylmaleate, diethylfumarate, diallylfumarate, bis-2-methoxy-1-methylethylmaleate, monooctylmaleate, monoisooctylmaleate, monoallylmaleate, monomethylmaleate, monoethylfumarate, monoallylfumarate, and 2-methoxy-1-methylethylmaleate; alkenylsiloxanes such as 1,3,5,7-tetramethyl-1,3,5,7-tetravinylcyclotetrasiloxane and 1,3,5,7-tetramethyl-1,3,5,7-tetrahexenylcyclotetrasiloxane; and benzotriazole.

While the content of the reaction inhibitor is not limited, with respect to 100 parts by mass of the total of components (A) and (B) it is preferably 5 parts by mass or less or 3 parts by mass or less, while the lower limit thereof is 0.01 parts by mass or more or 0.1 parts by mass or more. Note that the content of the reaction inhibitor can be any range obtained by combining the abovementioned lower limits and upper limits.

Furthermore, the present composition may contain various compounding agents which are normally used in silicone rubber compositions to the extent that the object of the present invention is not impaired. Examples of compounding agents include extender fillers such as diatomaceous earth, quartz powder, and calcium carbonate; thermal conductive fillers such as alumina, zinc oxide, and boron nitride; flame retardant fillers such as magnesium hydroxide, and aluminum hydroxide; carbon black such as acetylene black, furnace black, and channel black; pigments such as titanium oxide, and red iron oxide; heat resistant agents such as rare earth oxides, cerium silanolate, and cerium fatty acid salts; metal mold release agents such as fatty acids such as stearic acid, zinc stearate, and calcium stearate and metal salts thereof; and dispersing agents such as alkoxysilanes, diphenylsilanediol, organo-functional silanes, and diorganosiloane oligomer capped at both molecular chain terminals with silanol groups.

### [Method for manufacturing a laminate of fluorosilicone rubber and silicone rubber]

The method of the present invention for manufacturing a laminate of a fluorosilicone rubber and a silicone rubber, comprises the following Steps (1) to (3):

### [Step (1)]

First, a silicone rubber composition comprising the following components (A) to (C) is cured.
(A) an organopolysiloxane having at least 2 alkenyl groups per molecule, and not having fluoroalkyl groups or having fluoroalkyl groups in a proportion of less than 20 mol% of all silicon atom-bonded organic groups;
(B) an organopolysiloxane having at least 2 silicon atom-bonded hydrogen atoms per molecule along with fluoroalkyl groups in a proportion of at least 5 mol% of all silicon atom-bonded organic groups; and
(C) a hydrosilylation reaction catalyst.

The silicone rubber composition is as described above. In Step (1), the silicone rubber composition is cured. The forming method is not limited, and examples thereof include die molding, compression molding, transfer molding, injection molding, extrusion molding, calendar molding, and forming method by wrapping a sheet shape silicone rubber composition around a mandrel, wherein the sheet is formed by using a calendar roll, and the like. While the curing method is not limited, and a known curing method such as steam vulcanization, or hot air vulcanization can be selected. However, it preferably involves heating the cured product to 100 to 200°C under a pressure of 2 to 100 kg/cm² due to being able to mold the cured product with dimensional accuracy. The thickness of the thus molded silicone rubber is not limited. Furthermore, while the forms of the molded fluorosilicone rubber is not limited, examples of the forms include sheet forms, roll forms, tube forms, and mass forms, with roll forms preferable in the case of molding a silicone rubber roll having a silicone rubber layer on the inner peripheral surface thereof and a fluorosilicone rubber layer on the outer peripheral surface thereof, in the manufacturing method of the present invention.

### [Step (2)]

Next, a fluorosilicone rubber composition comprising the following components (D) and (E) is laminated on a surface of a silicone rubber produced in Step (1) above:
(D) (D1) an organopolysiloxane having at least 1 alkenyl group per molecule along with fluoroalkyl groups in a proportion of at least 20 mol% of all silicon atom-bonded organic groups, or a mixture of components (D1) and (D2) an organopolysiloxane having at least 1 alkenyl group per molecule, and not having fluoroalkyl groups or having fluoroalkyl groups in a proportion of less than 20 mol% of all silicon atom-bonded organic groups; and
(E) a curing agent.

Component (D1) is an organopolysiloxane serving as a main agent of the fluorosilicone rubber composition and having at least 1 alkenyl group per molecule along with fluoroalkyl groups in a proportion of at least 20 mol% of all silicon atom-bonded organic groups. Exemplary alkenyl groups in component (D1) include alkenyl groups having 2 to 12 carbon atoms such as vinyl groups, allyl groups, butenyl groups, and hexenyl groups, with vinyl groups preferable. Furthermore, exemplary fluoroalkyl groups in component (D1) may include fluoroalkyl groups having 3 to 12 carbon atoms such as 3,3,3-trifluoropropyl groups, 4,4,4,3,3-pentafluorobutyl groups, 5,5,5,4,4,3,3-heptafluoropentyl groups, 6,6,6,5,5,4,4,3,3-nonafluorohexyl groups, and 7,7,7,6,6,5,5,4,4,3,3-undecafluoroheptyl groups, with 3,3,3-trifluoropropyl groups, 4,4,4,3,3-pentafluorobutyl groups, and 5,5,5,4,4,3,3-heptafluoropentyl groups preferable. The proportion of the fluoroalkyl group in component (D1) is at least 20 mol%, preferably at least 30 mol%, and at most 70 mol%, or at most 60 mol%, of all silicon atom-bonded organic groups. Note that the proportion of the fluoroalkyl group can be any range obtained by combining the abovementioned lower limits and upper limits. This is because, when the proportion of the fluoroalkyl group in component (D1) is the abovementioned lower limit or more, the oil resistance and fuel oil resistance of the obtained fluorosilicone rubber are improved; in contrast, when the proportion is the abovementioned upper limit or less, the heat resistance and cold resistance of the obtained fluorosilicone rubber are improved. Exemplary groups bonded to silicon atoms other than the alkenyl groups and fluoroalkyl groups in component (D1) include monovalent hydrocarbon groups having 1 to 20 carbon atoms, preferably 1 to 8 carbon atoms, with specific examples thereof including: alkyl groups such as methyl groups, ethyl groups, propyl groups, and butyl groups; cycloalkyl groups such as cyclohexyl groups; aryl groups such as phenyl groups and tolyl groups; and aralkyl groups such as benzyl groups and phenethyl groups, with alkyl groups and particularly methyl groups preferable.

While the molecular structure of such component (D1) is not limited, examples thereof include a linear structure, partially branched linear structure, and branched structure. Furthermore, while the viscosity of component (D1) is not limited, it is preferably a raw rubber-like substance from a liquid substance having a viscosity of at least 1 Pa·s at 25°C. The liquid substance is particularly preferably a liquid having a viscosity at 25°C of at least 10 Pa·s, and at most 1,000 Pa·s. Note that the viscosity at 25°C of component (D1) can be measured by a rotational viscometer in accordance with JIS K7117-1. In contrast, specific examples of the raw rubber form include a raw rubber having a Williams plasticity of 100 to 800 at 25°C set forth in JIS K 6249, a raw rubber having a Williams plasticity of 100 to 400, or a raw rubber having a Williams plasticity of 200 to 400.

The abovementioned fluorosilicone rubber composition may also contain (D2) an organopolysiloxane having at least 1 alkenyl group per molecule, and not having fluoroalkyl groups or having fluoroalkyl groups in a proportion of less than 20 mol% of all silicon atom-bonded organic groups. Exemplary alkenyl groups in this component (D2) include alkenyl groups having 2 to 12 carbon atoms such as vinyl groups, allyl groups, butenyl groups, and hexenyl groups, with vinyl groups preferable. Component (D2) does not have fluoroalkyl groups or has fluoroalkyl groups in a proportion of less than 20 mol% of all silicon atom-bonded organic groups. Exemplary fluoroalkyl groups that may be contained in component (D2) include fluoroalkyl groups having 3 to 12 carbon atoms such as 3,3,3-trifluoropropyl groups, 4,4,4,3,3-pentafluorobutyl groups, 5,5,5,4,4,3,3-heptafluoropentyl groups, 6,6,6,5,5,4,4,3,3-nonafluorohexyl groups, and 7,7,7,6,6,5,5,4,4,3,3-undecafluoroheptyl groups, with 3,3,3-trifluoropropyl groups, 4,4,4,3,3-pentafluorobutyl groups, and 5,5,5,4,4,3,3-heptafluoropentyl groups preferable. Exemplary groups bonded to silicon atoms other than the alkenyl groups and fluoroalkyl groups in component (D2) include monovalent hydrocarbon groups having 1 to 20 carbon atoms, preferably 1 to 8 carbon atoms, with specific examples thereof including: alkyl groups such as methyl groups, ethyl groups, propyl groups, and butyl groups; cycloalkyl groups such as cyclohexyl groups; aryl groups such as phenyl groups and tolyl groups; and aralkyl groups such as benzyl groups and phenethyl groups, with alkyl groups and particularly methyl groups preferable.

While the molecular structure of such component (D2) is not limited, examples thereof include a linear structure, a partially branched linear structure, and a branched structure. Furthermore, while the viscosity of component (D2) is not limited, it is preferably a raw rubber-like substance from a liquid substance having a viscosity at 25°C of at least 1 Pa·s. The liquid substance is particularly preferably a liquid having a viscosity at 25°C of at least 10 Pa·s, and at most 1,000 Pa·s. Note that the viscosity at 25°C of component (D2) can be measured by a rotational viscometer in accordance with JIS K7117-1. In contrast, specific examples of the raw rubber form include a raw rubber having a Williams plasticity at 25°C of 100 to 800 set forth in JIS K 6249, a raw rubber having a Williams plasticity of 100 to 400.

The content of component (D2) is optional; however, if component (D') is contained, a mass ratio of component (D1) to component (D2) is preferably within a range of 50:50 to 99:1, 60:40 to 99:1, 70:30 to 99:1, 80:20 to 99:1, or 85:15 to 99:1. This is because, when a proportion of component (D1) is the abovementioned lower limit range or more, the oil resistance and fuel oil resistance of the obtained fluorosilicone rubber are improved; in contrast, when the proportion is the abovementioned upper limit range or less, the adhesion between the obtained fluorosilicone rubber and the silicone rubber is favorable.

Component (E) is a curing agent of the abovementioned fluorosilicone rubber composition, with examples thereof including an organic peroxide or a combination of an organohydrogenpolysiloxane and a hydrosilylation reaction catalyst.

As component (E), a known organic peroxide can be used to cure the fluorosilicone rubber composition. Examples of such an organic peroxide as component (E) include benzoyl peroxide, tertiary butylperbenzoate, orthomethylbenzoyl peroxide, paramethylbenzoyl peroxide, ditertiary butyl peroxide, dicumyl peroxide, 1,1-bis(tertiary butylperoxy)3,3,5-trimethylcyclohexane, 2,5-dimethyl-2,5-di(tertiary butylperoxy)hexane, 2,5-dimethyl-2,5-di(tertiary butylperoxy)hexyne, and combinations of two or more thereof.

While the content of the organic peroxide as component (E) is not limited, it is preferably within a range of 0.1 to 10 parts by mass, within a range of 0.1 to 5 parts by mass, or within a range of 0.1 to 3 parts by mass, with respect to 100 parts by mass of the abovementioned component (D). This is because, when the content of component (E) is the abovementioned lower limit range or more, the obtained composition is sufficiently cured; in contrast, when the content is the abovementioned upper limit range or less, the mechanical properties of the obtained fluorosilicone rubber are favorable.

In contrast, the organohydrogenpolysiloxane as component (E) is not particularly limited as long as the organohydrogenpolysiloxane has at least 2 silicon atom-bonded hydrogen atoms per molecule. The organohydrogenpolysiloxane of component (E) may or may not have a fluoroalkyl group. Examples of fluoroalkyl groups may include fluoroalkyl groups having 3 to 12 carbon atoms such as 3,3,3-trifluoropropyl groups, 4,4,4,3,3-pentafluorobutyl groups, 5,5,5,4,4,3,3-heptafluoropentyl groups, 6,6,6,5,5,4,4,3,3-nonafluorohexyl groups, and 7,7,7,6,6,5,5,4,4,3,3-undecafluoroheptyl groups, with 3,3,3-trifluoropropyl groups, 4,4,4,3,3-pentafluorobutyl groups, and 5,5,5,4,4,3,3-heptafluoropentyl groups preferable. While a proportion of the fluoroalkyl group in component (E) is not limited, it is at least 5 mol%, at least 10 mol%, or at least 15 mol%, and at most 70 mol%, at most 60 mol%, at most 50 mol%, or at most 40 mol%, of all silicon atom-bonded organic groups. Note that the proportion of the fluoroalkyl group can be any range obtained by combining the abovementioned lower limits and upper limits. This is because, when the proportion of the fluoroalkyl group in component (E) is the abovementioned lower limit or more, the oil resistance and fuel oil resistance of the obtained fluorosilicone rubber are improved, while the adhesion between the obtained fluorosilicone rubber and the silicone rubber is improved; in contrast, when the proportion is the abovementioned upper limit or less, the heat resistance and cold resistance of the obtained fluorosilicone rubber are improved. Exemplary groups bonded to silicon atoms other than the hydrogen atoms and fluoroalkyl groups in component (E) include monovalent hydrocarbon groups having 1 to 20 carbon atoms, preferably 1 to 8 carbon atoms, with specific examples thereof including: alkyl groups such as methyl groups, ethyl groups, propyl groups, and butyl groups; cycloalkyl groups such as cyclohexyl groups; aryl groups such as phenyl groups and tolyl groups; and aralkyl groups such as benzyl groups and phenethyl groups, with alkyl groups and particularly methyl groups preferable.

While the molecular structure of the organohydrogenpolysiloxane of component (E) is not limited, examples thereof include a linear structure, a partially branched linear structure, a branched structure, a network structure, and a cyclic structure, with mixtures of two or more types having these molecular structures capable of being used. Exemplary organohydrogenpolysiloxanes of such component (E) include an organopolysiloxane represented by the general formula:

R¹₃SiO(R¹R^{f}SiO)ₘ(R¹HSiO)ₙSiR¹₃

or an organopolysiloxane represented by the average unit formula:

[HR¹₂SiO_{1/2}]ₓ(R^{f}SiO_{3/2})_{y}

In the formula, R¹ is the same or different monovalent hydrocarbon group having 1 to 20 carbon atoms and not having an aliphatic unsaturated bond, with examples thereof including the same groups as described above, with alkyl groups and particularly methyl groups preferable.

Furthermore, in the formula, R^{f} represents the same or different fluoroalkyl group, with examples thereof including the same groups as described above.

Furthermore, in the formula, "m" is an integer of 1 or more, "n" is an integer of 2 or more, and the sum of "m" and "n" is an integer within a range of 5 to 100, preferably an integer within a range of 10 to 50. Furthermore, a proportion of R^{f} with respect to the total of R¹ and R^{f} per molecule is preferably at least 5 mol%, at least 10 mol%, or at least 15 mol%, and at most 70 mol%, at most 60 mol%, at most 50 mol%, or at most 40 mol%. Note that the proportion of R^{f} can be any range obtained by combining the abovementioned lower limits and upper limits.

Furthermore, in the formula, each "x" and "y" is a number satisfying: 0 < x < 1, 0 < y < 1, and x + y = 1. Furthermore, a proportion of R^{f} with respect to the total of R¹ and R^{f} per molecule is preferably at least 5 mol%, at least 10 mol%, or at least 15 mol%, and at most 70 mol%, at most 60 mol%, at most 50 mol%, or at most 40 mol%. Note that the proportion of R^{f} can be any range obtained by combining the abovementioned lower limits and upper limits.

The content of the organohydrogenpolysiloxane as component (E) in the fluorosilicone rubber composition is not particularly limited as long as it is an amount enabling curing of the fluorosilicone rubber composition; specifically, the content of component (E) is an amount such that the amount of silicon atom-bonded hydrogen atoms in component (E) exceeds 1 mol, is preferably 1.1 mol or more, and 30 mol or less, 20 mol or less, 15 mol or less, or 10 mol or less, with respect to 1 mol of the total of alkenyl groups in component (D). Note that the content of component (E) can be any range obtained by combining the abovementioned lower limits and upper limits. This is because, when the content of component (E) is the abovementioned lower limit range or more, the adhesion between the obtained fluorosilicone rubber composition and the silicone rubber is favorable; in contrast, when the content is the abovementioned upper limit range or less, the adhesion between the obtained fluorosilicone rubber and the silicone rubber is favorable in the laminate body after exposure in a high temperature environment.

Examples of the hydrosilylation reaction catalyst as component (E) include platinum based catalysts, palladium based catalysts, and rhodium based catalysts, with platinum based catalysts preferable. Examples of this platinum based catalyst include chloroplatinic acid, an alcohol solution of chloroplatinic acid, a platinum-carbonyl complex, a platinum-alkenyl siloxane complex, a platinum-olefin complex, and a microcapsulated catalyst with a capsule made from an acrylic resin, polycarbonate resin, or a silicone resin in which the aforementioned platinum catalyst is dispersed or contained and which should have a softening point within a range of 40 to 170°C, with a platinum-alkenyl siloxane complex particularly preferable in terms of good compatibility with component (A). In this platinum-alkenylsiloxane complex, exemplary alkenyl siloxanes may include 1,3-divinyltetramethyldisiloxane and 1,1,3,3-tetravinyldimethyldisiloxane.

The content of the hydrosilylation reaction catalyst as component (E) is an amount sufficient to promote curing of the fluorosilicone rubber composition, and is specifically an amount in which the catalyst metals in component (E) to the fluorosilicone rubber composition are, in mass units, within a range of 0.1 to 1,000 ppm, within a range of 0.1 to 500 ppm, or within a range of 0.1 to 250 ppm, with respect to the present composition. This is because, when the content of the hydrosilylation reaction catalyst as component (E) is the abovementioned lower limit range or more, curing of the fluorosilicone rubber composition is sufficiently promoted; in contrast, when the content is the abovementioned upper limit range or less, problems such as coloring of the obtained fluorosilicone rubber are less likely to occur.

The fluorosilicone rubber composition may contain silica fine powder in order to improve the mechanical properties of the obtained fluorosilicone rubber. Examples of this silica fine powder include dry method silica such as fumed silica, along with wet method silica such as precipitated silica, and furthermore, fine powdery silica hydrophobized with an organosilicon compound such as organosilane, hexaorganodisilazane, diorganopolysiloxane, and diorganocyclopolysiloxane. While the BET specific surface area of the silica fine powder is not limited, it is preferably within a range of 50 m²/g to 400m²/g or within a range of 100 to 400 m²/g.

While the content of the silica fine powder is not limited, it is preferably 10 parts by mass or more with respect to 100 parts by mass of component (D) due to the favorable mechanical properties of the obtained fluorosilicone rubber, and it is preferably 100 parts by mass or less with respect to 100 parts by mass of component (D) due to the favorable moldability of the obtained fluorosilicone rubber composition.

When the fluorosilicone rubber composition is cured by a hydrosilylation reaction, a reaction inhibitor may be contained in order to adjust the curing speed thereof. Examples of this reaction inhibitor include: alkyne alcohols such as 2-methyl-3-butyn-2-ol, 3,5-dimethyl-1-hexyn-3-ol, 3-methyl-1-pentyn-3-ol, 2-phenyl-3-butyn-2-ol, 1-ethynyl-1-cyclohexanol, 2-ethynylisopropanol, and 2-ethynylbutan-2-ol; silylated acetylene alcohols such as trimethyl(3,5-dimethyl-1-hexyn-3-oxy)silane, dimethylbis(3-methyl-1-butynoxy)silane, methylvinylbis(3-methyl-1-butyn-3-oxy)silane, and [(1,1-dimethyl-2-propynyl)oxy]trimethylsilane; enyne compounds such as 2-isobutyl-1-buten-3-yne, 3,5-dimethyl-3-hexen-1-yne, 3-methyl-3-penten-1-yne, 3-methyl-3-hexen-1-yne, 1-ethynylcyclohexene, 3-ethyl-3-buten-1-yne, and 3-phenyl-3-buten-1-yne; unsaturated carboxylic acid esters such as diallylmaleate, dimethylmaleate, diethylfumarate, diallylfumarate, bis-2-methoxy-1-methylethylmaleate, monooctylmaleate, monoisooctylmaleate, monoallylmaleate, monomethylmaleate, monoethylfumarate, monoallylfumarate, and 2-methoxy-1-methylethylmaleate; alkenylsiloxanes such as 1,3,5,7-tetramethyl-1,3,5,7-tetravinylcyclotetrasiloxane and 1,3,5,7-tetramethyl-1,3,5,7-tetrahexenylcyclotetrasiloxane; and benzotriazole.

While the content of the reaction inhibitor is not limited, the upper limit thereof is preferably 5 parts by mass or less or 3 parts by mass or less with respect to 100 parts by mass of component (D), while the lower limit thereof is preferably 0.01 parts by mass or more or 0.1 parts by mass or more with respect to 100 parts by mass of component (D). Note that the content of the reaction inhibitor can be any range obtained by combining the abovementioned lower limits and upper limits.

Furthermore, the abovementioned fluorosilicone rubber composition may contain various compounding agents which are normally used in fluorosilicone rubber compositions to the extent that the object of the present invention is not impaired. Examples of this compounding agent include: extender fillers such as diatomaceous earth, quartz powder, and calcium carbonate; thermal conductive fillers such as alumina, zinc oxide, and boron nitride; flame retardant fillers such as magnesium hydroxide, and aluminum hydroxide; carbon black such as acetylene black, furnace black, and channel black; pigments such as titanium oxide, and red iron oxide; heat resistant agents such as rare earth oxides, cerium silanolate, and cerium fatty acid salts; metal mold release agents such as fatty acids such as stearic acid, zinc stearate, and calcium stearate and metal salts thereof; and dispersing agents such as alkoxysilanes, diphenylsilanediol, organo-functional silanes, and diorganosiloane oligomer capped at both molecular chain terminals with silanol groups.

In Step (2), the fluorosilicone rubber composition is laminated on a surface of a silicone rubber produced in Step (1) above. The lamination method is not limited, and examples thereof include a method of placing the fluorosilicone rubber composition on the silicone rubber in a compression molding machine and compression-molding the composition; a method of placing the silicone rubber in a mold and injecting the fluorosilicone rubber composition into the mold; a method involving applying dispersion with a fluorosilicone rubber composition dissolved in a solvent, then curing while removing the solvent in an oven, etc; a method of laminating a fluorosilicone rubber compositiom on a silicone rubber sheet formed by using a calendar roll; and a mthod of wrapping a sheet shape fluorosilicone rubber composition around a siliocone rubber product, wherein the sheet is formed by using a calendar roll, and the like. The thickness of the fluorosilicone rubber composition thus laminated on the silicone rubber is not limited. Furthermore, while the forms of the laminated fluorosilicone rubber composition is not limited, examples thereof include sheet forms, roll forms, tube forms, and mass forms, with roll forms preferable in the case of molding a silicone rubber roll having a silicone rubber layer on the inner peripheral surface thereof and a fluorosilicone rubber layer on the outer peripheral surface thereof, in the manufacturing method of the present invention.

### [Step (3)]

Next, the fluorosilicone rubber composition laminated in Step (2) above is cured. In Step (2) above, when a compression molding machine or an injection molding machine is used, the fluorosilicone rubber composition can be cured by heating the molding machine to 100 to 200°C under a pressure of 2 to 100 kg/cm². Furthermore, after molding a laminate of a fluorosilicone rubber and a silicone rubber, secondary vulcanization may be carried out by heating the laminate.

Furthermore, another method of the present invention for manufacturing a laminate of a fluorosilicone rubber and a silicone rubber comprises the following Steps (1') to (2'):

### [Step (1')]

First, a laminate of a fluorosilicone rubber composition layer and a silicone rubber composition layer is produced, wherein the fluorosilicone rubber composition comprises the following components (A) to (C):
(A) an organopolysiloxane having at least 2 alkenyl groups per molecule, and not having fluoroalkyl groups or having fluoroalkyl groups in a proportion of less than 20 mol% of all silicon atom-bonded organic groups;
(B) an organopolysiloxane having at least 2 silicon atom-bonded hydrogen atoms per molecule along with fluoroalkyl groups in a proportion of at least 5 mol% of all silicon atom-bonded organic groups; and
(C) a hydrosilylation reaction catalyst,
   and a fluorosilicone rubber composition comprsing the following components (D) and (E):
(D) (D1) an organopolysiloxane having at least 1 alkenyl group per molecule along with fluoroalkyl groups in a proportion of at least 20 mol% of all silicon atom-bonded organic groups, or a mixture of components (D1) and (D2) an organopolysiloxane having at least 1 alkenyl group per molecule, and not having fluoroalkyl groups or having fluoroalkyl groups in a proportion of less than 20 mol% of all silicon atom-bonded organic groups; and
(E) a curing agent.

The silicone rubber composition and the fluorosilicone rubber composition are as described above. The lamination method is not limited, and examples thereof include a method of placing the fluorosilicone rubber composition on the silicone rubber composition in a compression molding machine and compression-molding the compositions; a method of placing the silicone rubber composition in a mold and injecting the fluorosilicone rubber composition into the mold; a method of placing the fluorosilicone rubber composition in a mold and injecting the silicone rubber composition into the mold; a method of laminating the silicone rubber composition and the fluorosilicone rubber compostion by using two step extrution; a method of laminating the silicone rubber compositiom and the fluorosilicone rubber composition formed by using a calendar roll; a mthod of wrapping a sheet shape fluorosilicone rubber composition and a sheet shape siliocone rubber composition around a mandrel, wherein each the sheet is formed by using a calendar roll, and the like; and a method involving applying dispersion with a fluorosilicone rubber composition dissolved in a solvent, then curing while removing the solvent in an oven, etc. However, according to the two step extrution and the calmedar mold, forming and laminating the fluorosilicon rubber composition and the silicone rubber composition can be executed simultaneously. The thickness of the fluorosilicone rubber composition laminated on the silicone rubber composition in this way is not limited. The shape of the laminated fluorosilicone rubber composition is not limited, and examples thereof include a sheet shape, a roll shape, a tube shape, or a clump shape. In the production method of the present invention, a roll form is preferably in the case of molding a roll having a silicone rubber layer on the inner peripheral surface thereof and a fluorosilicone rubber layer on the outer peripheral surface thereof.

### [Step (2')]

Next, the silicone rubber composition and the fluorosilicone rubber composition laminated in Step (1') above are cured. The curing method is not limited too, and a known curing method such as steam vulcanization, or hot air vulcanization can be selected to cure the fluorosilicone rubber composition and the silicone rubber composition in the laminate. In Step (1') above, when a compression molding machine or an injection molding machine is used, the silicone rubber composition and the fluorosilicone rubber composition can be cured by heating the molding machine to 100 to 200°C under a pressure of 2 to 100 kg/cm². Furthermore, after molding a laminate of a fluorosilicone rubber and a silicone rubber, secondary vulcanization may be carried out by heating the laminate.

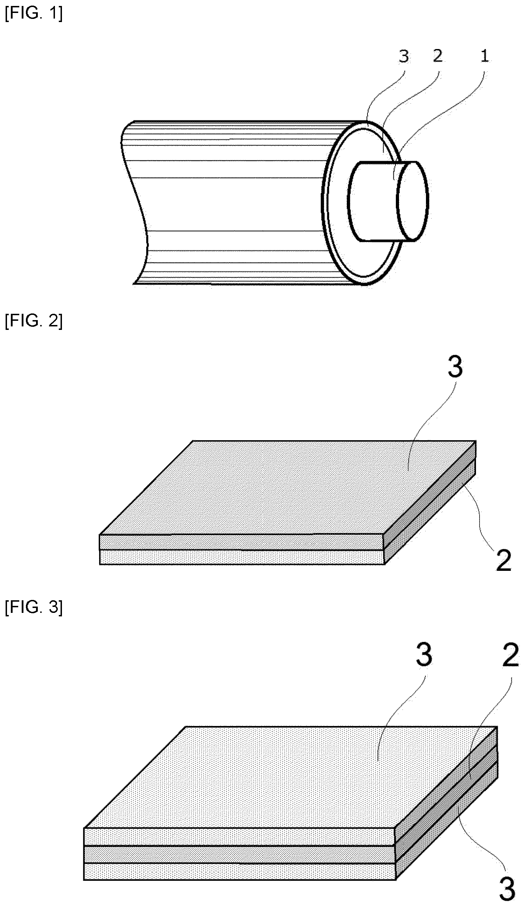

While the form of the laminate of the fluorosilicone rubber and the silicone rubber obtained by the manufacturing method of the present invention is not limited, examples thereof include roll forms as illustrated in FIG. 1. Because the laminate in which a silicone rubber layer 2 is formed on the peripheral surface of a cored bar 1, while a fluorosilicone rubber layer 3 is formed on the outer peripheral surface of the cored bar 1, has excellent heat resistance and toner releasability, the laminate can be used as a fixing roll of a copying machine, a printing machine, etc.

In addition, in the laminate of the fluorosilicone rubber and the silicone rubber obtained by the manufacturing method of the present invention, when the form thereof is a sheet form illustrated in FIG. 2 or FIG. 3, a laminate, in which the fluorosilicone rubber layer 3 is formed on one side or both sides of the silicone rubber layer 2, can be used as a sheet having excellent heat resistance and fuel resistance, for example, as a rubber sheet for a diaphragm.

### [Examples]

The silicone rubber composition and the method for manufacturing a laminate of a fluorosilicone rubber and a silicone rubber of the present invention will be described in detail with reference to Pracatical Examples and Comparative Examples. Note that the present invention is not limited to these examples. Furthermore, in the examples, properties such as viscosity and plasticity are values at room temperature (25°C), unless otherwise limited. Note that the viscosity (Pa·s) is a value measured using a rotational viscometer in accordance with JIS K7117-1, the kinematic viscosity (mm²/s) is a value measured by a Ubbelohde viscometer in accordance with JIS Z8803, and the Williams plasticity is a value measured by the method set forth in JIS K 6249.

### [Reference Example 1]

30.9 parts by mass of a copolymer of dimethylsiloxane and methylvinylsiloxane substantially capped at both molecular chain terminals with dimethylvinylsiloxy groups, capped at a portion thereof with hydroxy groups, and having a Williams plasticity of 165 (vinyl group content = 0.07 mass%), 29.2 parts by mass of a dimethylpolysiloxane capped at both molecular chain terminals with dimethylvinylsiloxy groups, capped at a portion thereof with hydroxy groups, and having a Williams plasticity of 160 (vinyl group content = 0.01 mass%), 4.2 parts by mass of a copolymer of dimethylsiloxane and methylvinylsiloxane capped at both molecular chain terminals with hydroxy groups, and having a Williams plasticity of 160 (vinyl group content = 1.4 mass%), 26.7 parts by mass of fumed silica having a BET specific surface area of 300 m²/g, and 8.9 parts by mass of a dimethylsiloxane oligomer capped at both molecular chain terminals with hydroxy groups and having a kinematic viscosity of 10 mm²/s were added into a kneader mixer, mixed at 50°C for 2 hours, and further mixed at 120°C for 2 hours under reduced pressure to prepare a silicone rubber base compound.

Next, in 100 parts by mass of this silicone rubber base compound, 2.5 parts by mass of an organopolysiloxane represented by the average unit formula:

[H(CH₃)₂SiO_{1/2}]_{0.65}(CF₃C₂H₄SiO_{3/2})_{0.35}

(amount such that the amount of silicon atom-bonded hydrogen atoms is 3.9 mol with respect to 1 mol of all vinyl groups in the silicone rubber base compound), 1 part by pass of a hydrosilylation reaction catalyst (platinum content = 0.02 mass%) in which a platinum-1,3-divinyl-1,1,3,3-tetramethyldisiloxane complex was diluted with a copolymer of dimethylsiloxane and methylvinylsiloxane substantially capped at both molecular chain terminals wth dimethylvinylsiloxy groups, capped at a portion thereof with hydroxy groups, and having a Williams plasticity of 165 (vinyl group content = 0.07 mass%), and 0.03 parts by mass of 1-ethynyl-1-cyclohexanol were uniformly mixed to prepare a silicone rubber composition (1).

### [Reference Example 2]

30.9 parts by mass of a copolymer of dimethylsiloxane and methylvinylsiloxane substantially capped at both molecular chain terminals with dimethylvinylsiloxy groups, capped at a portion thereof with hydroxy groups, and having a Williams plasticity of 165 (vinyl group content = 0.07 mass%), 29.2 parts by mass of a dimethylpolysiloxane substantially capped at both molecular chain terminals with dimethylvinylsiloxy groups, capped at a portion thereof with hydroxy groups, and having a Williams plasticity of 160 (vinyl group content = 0.01 mass%), 4.2 parts by mass of a copolymer of dimethylsiloxane and methylvinylsiloxane capped at both molecular chain terminals with hydroxy groups and having a Williams plasticity of 160 (vinyl group content = 1.4 mass%), 26.7 parts by mass of fumed silica having a BET specific surface area of 300 m²/g, and 8.9 parts by mass of a dimethylsiloxane oligomer capped at both molecular chain terminals with hydroxy groups and having a kinematic viscosity of 10 mm²/s were added into a kneader mixer, mixed at 50°C for 2 hours, and further mixed at 120°C for 2 hours under reduced pressure to prepare a silicone rubber base compound.

Next, a silicone rubber composition (2) was prepared by uniformly mixing 0.3 parts by mass of 2,5-dimethyl-2,5-di (tert-butylperoxy)hexane in 100 parts by mass of this silicone rubber base compound.

### [Reference Example 3]

30.9 parts by mass of a copolymer of dimethylsiloxane and methylvinylsiloxane substantially capped at both molecular chain terminals with dimethylvinylsiloxy groups, capped at a portion thereof with hydroxy groups and having a Williams plasticity of 165 (vinyl group content = 0.07 mass%), 29.2 parts by mass of a dimethylpolysiloxane substantially capped at both molecular chain terminals with dimethylvinylsiloxy groups, capped at a portion thereof with hydroxy groups and having a Williams plasticity of 160 (vinyl group content = 0.01 mass%), 4.2 parts by mass of a copolymer of dimethylsiloxane and methylvinylsiloxane capped at both molecular chain terminals with hydroxy groups and having a Williams plasticity of 160 (vinyl group content = 1.4 mass%), 26.7 parts by mass of fumed silica having a BET specific surface area of 300 m²/g, and 8.9 parts by mass of a dimethylsiloxane oligomer capped at both molecular chain terminals with hydroxy groups and having a kinematic viscosity of 10 mm²/s were added into a kneader mixer, mixed at 50°C for 2 hours, and further mixed at 120°C for 2 hours under reduced pressure to prepare a silicone rubber base compound.

Next, in 100 parts by mass of this silicone rubber base compound, 2.8 parts by mass of a hydrosilylation reaction catalyst (platinum content = 0.02 mass%) in which a platinum-1,3-divinyl-1,1,3,3-tetramethyldisiloxane complex was diluted with a copolymer of dimethylsiloxane and methylvinylsiloxane substantially capped at both molecular chain terminals with dimethylvinylsiloxy groups, capped at a portion thereof with hydroxy groups, and having a Williams plasticity of 165 (vinyl group content = 0.07 mass%), and 0.3 parts by mass of 2,5-dimethyl-2,5-di (tert-butylperoxy)hexane were uniformly mixed to prepare a silicone rubber composition (3).

### [Reference Example 4]

100 parts by mass of a copolymer of methylvinylsiloxane and methyl(3,3,3-trifloropropyl)siloxane capped at both molecular chain terminals with hydroxy groups and having a Williams plasticity of 300 (vinyl group content = 0.01 mass%; the proportion of 3,3,3-trifloropropyl groups per all silicon atom-bonded organic groups = about 50 mol%), 5.6 parts by mass of a copolymer of dimethylsiloxane and methylvinylsiloxane substantially capped at both molecular chain terminals with dimethylvinylsiloxy groups, capped at a portion thereof with hydroxy groups, and having a Williams plasticity of 165 (vinyl group content = 0.07 mass%), 5.6 parts by mass of a copolymer of dimethylsiloxane and methylvinylsiloxane capped at both molecular chain terminals with hydroxy groups and having a Williams plasticity of 160 (vinyl group content = 1.4 mass%), 41 part by mass of fumed silica having a BET specific surface area of 130 m²/g, and 5.6 parts by mass of a methyl(3,3,3-trifloropropyl)siloxane oligomer capped at both molecular chain terminals with hydroxy groups and having a kinematic viscosity of 30 mm²/s were added into a kneader mixer, mixed at 50°C for 2 hours, and further mixed at 120°C for 2 hours under reduced pressure to prepare a fluorosilicone rubber base compound.

Next, a fluorosilicone rubber composition (4) was prepared by uniformly mixing 0.3 parts by mass of 2,5-dimethyl-2,5-di (tert-butylperoxy)hexane in 100 parts by mass of this fluorosilicone rubber base compound.

### [Reference Example 5]

100 parts by mass of a copolymer of methylvinylsiloxane and methyl(3,3,3-trifloropropyl)siloxane capped at both molecular chain terminals with hydroxy groups and having a Williams plasticity of 300 (vinyl group content = 0.01 mass%; the proportion of 3,3,3-trifloropropyl groups per all silicon atom-bonded organic groups = about 50 mol%), 5.6 parts by mass of a copolymer of dimethylsiloxane and methylvinylsiloxane substantially capped at both molecular chain terminals with dimethylvinylsiloxy groups, capped at a portion thereof with hydroxy groups, and having a Williams plasticity of 165 (vinyl group content = 0.07 mass%), 5.6 parts by mass of a copolymer of dimethylsiloxane and methylvinylsiloxane capped at both molecular chain terminals with hydroxy groups and having a Williams plasticity of 160 (vinyl group content = 1.4 mass%), 41 part by mass of fumed silica having a BET specific surface area of 130 m²/g, and 5.6 parts by mass of a methyl(3,3,3-trifloropropyl)siloxane oligomer capped at both molecular chain terminals with hydroxy groups and having a kinematic viscosity of 30 mm²/s were added into a kneader mixer, mixed at 50°C for 2 hours, and further mixed at 120°C for 2 hours under reduced pressure to prepare a fluorosilicone rubber base compound.

Next, in 100 parts by mass of this fluorosilicone rubber base compound, 2.5 parts by mass of an organopolysiloxane represented by the average unit formula:

[H(CH₃)₂SiO_{1/2}]_{0.65}(CF₃C₂H₄SiO_{3/2})_{0.35}

(amount such that the amount of silicon atom-bonded hydrogen atoms is 5.7 mol with respect to 1 mol of all vinyl groups in the fluorosilicone rubber base compound), 1 part by pass of a hydrosilylation reaction catalyst (platinum content = 0.02 mass%) in which a platinum-1,3-divinyl-1,1,3,3-tetramethyldisiloxane complex was diluted with a copolymer of dimethylsiloxane and methylvinylsiloxane substantially capped at both molecular chain terminals with dimethylvinylsiloxy groups, capped at a portion thereof with hydroxy groups, and having a Williams plasticity of 165 (vinyl group content = 0.07 mass%), and 0.03 parts by mass of 1-ethynyl-1-cyclohexanol were uniformly mixed to prepare a fluorosilicone rubber composition (5).

### [Reference Example 6]

100 parts by mass of a methyl(3,3,3-trifluoropropyl)polysiloxane capped at both molecular chain terminals with dimethylvinylsiloxy groups and having a viscosity of 40 Pa·s (vinyl group content = 0.15 mass%; the proportion of 3,3,3-trifluoropropyl groups per all silicon atom-bonded organic groups = about 49 mol%), 30 parts by mass of fumed silica having a BET specific surface area of 250 m²/g, 0.6 parts by mass of 1,3-divinyltetramethyldisilazane, 6.0 parts by mass of 1 ,3-di(3,3,3-trifluoropropyl)tetramethyldisilazane, 3.0 parts by mass of hexamethyldisilazane, and 2.2 parts by mass of water were added into a Ross mixer, mixed at 50°C for 2 hours, and further mixed at 120°C for 2 hours under reduced pressure to prepare a fluorosilicone rubber base compound.

Next, in 100 parts by mass of this fluorosilicone rubber base compound, 2.8 parts by mass of an organopolysiloxane represented by the average unit formula:

[H(CH₃)₂SiO_{1/2}]_{0.65}(CF₃C₂H₄SiO_{3/2})_{0.35}

(amount such that the amount of silicon atom-bonded hydrogen atoms is 1.2 mol with respect to 1 mol of all vinyl groups in the fluorosilicone rubber base compound), 0.3 parts by pass of a hydrosilylation reaction catalyst (platinum content = 0.02 mass%) in which a platinum-1,3-divinyl-1,1,3,3-tetramethyldisiloxane complex was microencapsulated with a thermoplastic silicone resin was uniformly mixed to prepare a fluorosilicone rubber composition (6).

### [Practical Examples 1 to 3]

First, a silicone rubber sheet having a thickness of 2.0 mm was produced by heating the silicone rubber composition prepared in Reference Example 1 at 150°C for 10 minutes. Next, the fluorosilicone rubber compositions prepared in Reference Examples 4 to 6 were laminated on one side of this silicone rubber sheet to a thickness 0.5 mm. Thereafter, a laminate sheet of fluorosilicone rubber and silicone rubber was produced by heat pressing the silicone rubber sheet at 170°C for 10 minutes with the fluorosilicone rubber composition layer formed therein. The adhesion between the fluorosilicone rubber layer and the silicone rubber layer in this laminated sheet was evaluated, with the results thereof indicated in Table 1.

### [Comparative Examples 1 to 3]

First, a silicone rubber sheet having a thickness of 2.0 mm was produced by heating the silicone rubber composition prepared in Reference Example 2 or 3 at 170°C for 10 minutes. Next, the silicone rubber composition prepared in Reference Example 5 or 6 was laminated on one side of this silicone rubber sheet to a thickness 0.5 mm. Thereafter, a laminate sheet of fluorosilicone rubber and silicone rubber was produced by heat pressing the fluorosilicone rubber sheet at 170°C for 10 minutes with the silicone rubber composition layer formed therein. The adhesion between the fluorosilicone rubber layer and the silicone rubber layer in this laminated sheet was evaluated, with the results indicated in Table 1.

### [Practical Example 4]

First, the silicone rubber composition (1) prepared in Reference Example 1 was molded into a sheet having a thickness of 2.0 mm, after which the fluorosilicone rubber composition (4) prepared in Reference Example 4 was laminated on this silicone rubber composition sheet to give a thickness 0.5 mm. Thereafter, a laminate sheet of fluorosilicone rubber and silicone rubber was produced by heat pressing this laminate body at 170°C for 10 minutes. The adhesion between the fluorosilicone rubber layer and the silicone rubber layer in this laminated sheet was evaluated, with the results thereof indicated in Table 1.

### [Evaluation of adhesion]

The laminate prepared as described above was left to stand at room temperature for one day, after which the laminate was cut into ribbons with a width of 25 mm and the initial adhesion between the fluorosilicone rubber layer and the silicone rubber layer was evaluated by T-peeling. When the fluorosilicone rubber layer and the silicone rubber layer were firmly adhered and peeling was observed, the case in which strong peeling resistance and cohesive failure were observed was evaluated as "O", the case in which interfacial peeling without resistance was observed was evaluated as "△", and the case in which interfacial adhesion, because the silicone rubber layer during the T-peeling test was cut, etc., was not observed was evaluated as "×".

**[Table 1]**

| Sections | Practical Example | | | | Comparative Example | | |
|---|---|---|---|---|---|---|---|
| Items | 1 | 2 | 3 | 4 | 1 | 2 | 3 |
| Type of the silicone rubber composition | (1) | (1) | (1) | (1) | (2) | (2) | (3) |
| Type of the fluorosilicone rubber composition | (4) | (5) | (6) | (4) | (5) | (6) | (6) |
| Adhesive | ○ | ○ | ○ | ○ | × | × | × |

### [Industrial Applicability]

The silicone rubber composition of the present invention enables the formation of a silicone rubber having excellent adhesion to a fluorosilicone rubber composition and is therefore available as a material for a laminate of a fluorosilicone rubber and a silicone rubber, specifically, as a material for a fixing roll of a printing machine or a copying machine.

### [Reference Numerals]

1 Cored bar
2 Silicone rubber layer
3 Fluorosilicone rubber layer

## Claims

1. A silicone rubber composition comprising the following components (A) to (C):
(A) 100 parts by mass of an organopolysiloxane having at least 2 alkenyl groups per molecule, and not having fluoroalkyl groups or having fluoroalkyl groups in a proportion of less than 20 mol% of all silicon atom-bonded organic groups;
(B) an organopolysiloxane having at least 2 silicon atom-bonded hydrogen atoms per molecule along with fluoroalkyl groups in a proportion of at least 5 mol% of all silicon atom-bonded organic groups, in an amount that the silicon atom-bonded hydrogen atoms in component (B) exceeds 1 mol with respect to 1 mol of the total of alkenyl groups in component (A); and
(C) a hydrosilylation reaction catalyst in a catalytic amount.

2. The silicone rubber composition according to Claim 1, wherein component (B) is an organopolysiloxane represented by the average unit formula:
[HR¹₂SiO_{1/2}]ₓ(R^{f}SiO_{3/2})_{y}
wherein, R¹ is the same or different monovalent hydrocarbon group having 1 to 20 carbon atoms without an aliphatic unsaturated bond, R^{f} is the same or different fluoroalkyl group, and each "x" and "y" is a number satisfying: 0 < x < 1,0 < y < 1, and x + y = 1.

3. The silicone rubber composition according to Claim 1, further comprising: a fine powdery silica based filler, in an amount of 5 to 200 parts by mass with respect to 100 parts by mass of component (A).

4. A method for manufacturing a laminate of a fluorosilicone rubber and a silicone rubber, comprising the following Steps (1) to (3):
(1) curing a silicone rubber composition comprising the following components (A) to (C):
(A) 100 parts by mass of an organopolysiloxane having at least 2 alkenyl groups per molecule, and not having fluoroalkyl groups or having fluoroalkyl groups in a proportion of less than 20 mol% of all silicon atom-bonded organic groups;
(B) an organopolysiloxane having at least 2 silicon atom-bonded hydrogen atoms per molecule along with fluoroalkyl groups in a proportion of at least 5 mol% of all silicon atom-bonded organic groups, in an amount that the silicon atom-bonded hydrogen atoms in component (B) exceeds 1 mol with respect to 1 mol of the total of alkenyl groups in component (A); and
(C) a hydrosilylation reaction catalyst in a catalytic amount,
(2) laminating a fluorosilicone rubber composition comprising the following components (D) and (E) on a surface of a silicone rubber produced in Step (1) above:
(D) 100 parts by mass of (D1) an organopolysiloxane having at least 1 alkenyl group per molecule along with fluoroalkyl groups in a proportion of at least 20 mol% of all silicon atom-bonded organic groups, or a mixture of components (D1) and (D2) an organopolysiloxane having at least 1 alkenyl group per molecule, and not having fluoroalkyl groups or having fluoroalkyl groups in a proportion of less than 20 mol% of all silicon atom-bonded organic groups; and
(E) an effective amount of a curing agent, and
(3) curing the fluorosilicone rubber composition laminated in Step (2) above.

5. The method for manufacturing a laminate according to Claim 4, wherein component (B) is an organopolysiloxane represented by the average unit formula:
[HR¹₂SiO_{1/2}]ₓ(R^{f}SiO_{3/2})_{y}
wherein, R¹ is the same or different monovalent hydrocarbon group having 1 to 20 carbon atoms without an aliphatic unsaturated bond, R^{f} is the same or different fluoroalkyl group, and each "x" and "y" is a number satisfying: 0 < x < 1,0 < y < 1, and x + y = 1.

6. The method for manufacturing a laminate according to Claim 4, wherein the silicone rubber composition further comprises: a fine powdery silica based filler, in an amount of 5 to 200 parts by mass with respect to 100 parts by mass of component (A).

7. A method for manufacturing a laminate of a fluorosilicone rubber and a silicone rubber, comprising the following Steps (1') to (2'):
(1') producing a laminate of a fluorosilicone rubber composition layer and a silicone rubber composition layer by laminating a silicone rubber composition comprising the following components (A) to (C):
(A) 100 parts by mass of an organopolysiloxane having at least 2 alkenyl groups per molecule, and not having fluoroalkyl groups or having fluoroalkyl groups in a proportion of less than 20 mol% of all silicon atom-bonded organic groups;
(B) an organopolysiloxane having at least 2 silicon atom-bonded hydrogen atoms per molecule along with fluoroalkyl groups in a proportion of at least 5 mol% of all silicon atom-bonded organic groups, in an amount that the silicon atom-bonded hydrogen atoms in component (B) exceeds 1 mol with respect to 1 mol of the total alkenyl groups in component (A); and
(C) a hydrosilylation reaction catalyst in a catalytic amount,
and a fluorosilicone rubber composition comprising the following components (D) and (E):
(D) 100 parts by mass of (D1) an organopolysiloxane having at least 1 alkenyl group per molecule along with fluoroalkyl groups in a proportion of at least 20 mol% of all silicon atom-bonded organic groups, or a mixture of components (D1) and (D2) an organopolysiloxane having at least 1 alkenyl group per molecule, and not having fluoroalkyl groups or having fluoroalkyl groups in a proportion of less than 20 mol% of all silicon atom-bonded organic groups; and
(E) an effective amount of a curing agent, and
(2') curing a fluorosilicone rubber composition layer and a silicone rubber composition layer of a laminate produced in Step (1') above.

8. The method for manufacturing a laminate according to Claim 7, wherein component (B) is an organopolysiloxane represented by the average unit formula:
[HR¹₂SiO_{1/2}]ₓ(R^{f}SiO_{3/2})_{y}
wherein, R¹ is the same or different monovalent hydrocarbon group having 1 to 20 carbon atoms without an aliphatic unsaturated bond, R^{f} is the same or different fluoroalkyl group, and each "x" and "y" is a number satisfying: 0 < x < 1,0 < y < 1, and x + y = 1.

9. The method for manufacturing a laminate according to Claim 7, wherein the silicone rubber composition further comprises: a fine powdery silica based filler, in an amount of 5 to 200 parts by mass with respect to 100 parts by mass of component (A).

## Patentansprüche

1. Siliconkautschukzusammensetzung, umfassend die folgenden Komponenten (A) bis (C):
(A) 100 Massenteile ein Organopolysiloxan, das mindestens 2 Alkenylgruppen pro Molekül aufweist und das keine Fluoralkylgruppen aufweist oder das Fluoralkylgruppen in einem Anteil von weniger als 20 Mol-% aller Siliciumatom-gebundenen organischen Gruppen aufweist;
(B) ein Organopolysiloxan, das mindestens 2 Siliciumatom-gebundene Wasserstoffatome pro Molekül zusammen mit Fluoralkylgruppen in einem Anteil von mindestens 5 Mol-% aller Siliciumatom-gebundenen organischen Gruppen in einer Menge aufweist, die die Siliciumatom-gebundenen Wasserstoffatome in Komponente (B) 1 Mol hinsichtlich 1 Mol der gesamten Alkenylgruppen in Komponente (A) überschreitet; und
(C) einen Hydrosilylierungsreaktionskatalysator in einer katalytischen Menge.

2. Siliconkautschukzusammensetzung nach Anspruch 1; wobei Komponente (B) ein Organopolysiloxan ist, das durch die durchschnittliche Einheitsformel dargestellt wird:
[HR¹₂SiO_{1/2}]ₓ(R^{f}SiO_{3/2})_{y}
wobei R¹ die gleiche oder eine unterschiedliche einwertige Kohlenwasserstoffgruppe ist, die 1 bis 20 Kohlenstoffatome ohne aliphatische ungesättigte Bindung aufweist, R^{f} die gleiche oder unterschiedliche Fluoralkylgruppe ist, und jedes "x" und "y" eine Zahl ist, die erfüllt: 0 < x < 1, 0 < y < 1 und x + y = 1.

3. Siliconkautschukzusammensetzung nach Anspruch 1, ferner umfassend: ein feinpulvriger Siliciumdioxid-basierter Füllstoff in einer Menge von 5 bis 200 Massenteile pro 100 Massenteilen von Komponente (A).

4. Verfahren zum Herstellen eines Laminats eines Fluorsiliconkautschuk und einem Siliconkautschuk, umfassend die folgenden Schritte (1) bis (3):
(1) Härten einer Siliconkautschukzusammensetzung, umfassend die folgenden Komponenten (A) bis (C):
(A) 100 Massenteile ein Organopolysiloxan, das mindestens 2 Alkenylgruppen pro Molekül aufweist und das keine Fluoralkylgruppen aufweist oder das Fluoralkylgruppen in einem Anteil von weniger als 20 Mol- % aller Siliciumatom-gebundenen organischen Gruppen aufweist;
(B) ein Organopolysiloxan, das mindestens 2 Siliciumatom-gebundene Wasserstoffatome pro Molekül zusammen mit Fluoralkylgruppen in einem Anteil von mindestens 5 Mol- % aller Siliciumatom-gebundenen organischen Gruppen in einer Menge aufweist, die die Siliciumatom-gebundenen Wasserstoffatome in Komponente (B) 1 Mol hinsichtlich 1 Mol der gesamten Alkenylgruppen in Komponente (A) überschreitet; und
(C) einen Hydrosilylierungsreaktionskatalysator in einer katalytischen Menge,
(2) Laminieren einer Fluorsiliconkautschukzusammensetzung, umfassend die folgenden Komponenten (D) und (E) auf einer Oberfläche eines Siliconkautschuks, der in vorhergehendem Schritt (1) produziert wird:
(D) 100 Massenteile (D1) ein Organopolysiloxan, das mindestens 1 Alkenylgruppe pro Molekül zusammen mit Fluoralkylgruppen in einem Anteil von mindestens 20 Mol- % aller Siliciumatom-gebundenen organischen Gruppen aufweist, oder eine Mischung von Komponenten (D1) und (D2) ein Organopolysiloxan, das mindestens 1 Alkenylgruppe pro Molekül aufweist und das keine Fluoralkylgruppen aufweist oder das Fluoralkylgruppen in einem Anteil von weniger als 20 Mol- % aller Siliciumatom-gebundenen organischen Gruppen aufweist; und
(E) eine wirksame Menge eines Härtungsmittels, und
(3) Härten der Fluorsiliconkautschukzusammensetzung, die in vorhergehenden Schritt (2) laminiert wird.

5. Verfahren zum Herstellen eines Laminats nach Anspruch 4, wobei Komponente (B) ein Organopolysiloxan ist, das durch die durchschnittliche Einheitsformel dargestellt wird:
[HR¹₂SiO_{1/2}]ₓ(R^{f}SiO_{3/2})_{y}
wobei R¹ die gleiche oder eine unterschiedliche einwertige Kohlenwasserstoffgruppe ist, die 1 bis 20 Kohlenstoffatome ohne aliphatische ungesättigte Bindung aufweist, R^{f} die gleiche oder unterschiedliche Fluoralkylgruppe ist, und jedes "x" und "y" eine Zahl ist, die erfüllt: 0 < x < 1, 0 < y < 1 und x + y = 1.

6. Verfahren zum Herstellen eines Laminats nach Anspruch 4, wobei die Siliconkautschukzusammensetzung ferner umfasst: einen feinpulvrigen Siliciumdioxid-basierten Füllstoff in einer Menge von 5 bis 200 Massenteilen hinsichtlich 100 Massenteile von Komponente (A).

7. Verfahren zum Herstellen eines Laminats eines Fluorsiliconkautschuk und einem Siliconkautschuk, umfassend die folgenden Schritte (1') bis (2'):
(1') Produzieren eines Laminats einer Fluorsiliconkautschukzusammensetzungsschicht und einer Siliconkautschukzusammensetzungsschicht durch Laminieren einer Siliconkautschukzusammensetzung, umfassend die folgenden Komponenten (A) bis (C):
(A) 100 Massenteile ein Organopolysiloxan, das mindestens 2 Alkenylgruppen pro Molekül aufweist und das keine Fluoralkylgruppen aufweist oder das Fluoralkylgruppen in einem Anteil von weniger als 20 Mol- % aller Siliciumatom-gebundenen organischen Gruppen aufweist;
(B) ein Organopolysiloxan, das mindestens 2 Siliciumatom-gebundene Wasserstoffatome pro Molekül zusammen mit Fluoralkylgruppen in einem Anteil von mindestens 5 Mol- % aller Siliciumatom-gebundenen organischen Gruppen in einer Menge aufweist, die die Siliciumatom-gebundenen Wasserstoffatome in Komponente (B) 1 Mol hinsichtlich 1 Mol der gesamten Alkenylgruppen in Komponente (A) überschreitet; und
(C) einen Hydrosilylierungsreaktionskatalysator in einer katalytischen Menge und eine Fluorsiliconkautschukzusammensetzung, umfassend die folgenden Komponenten (D) und (E):
(D) 100 Massenteile (D1) ein Organopolysiloxan, das mindestens 1 Alkenylgruppe pro Molekül zusammen mit Fluoralkylgruppen in einem Anteil von mindestens 20 Mol- % aller Siliciumatom-gebundenen organischen Gruppen aufweist, oder eine Mischung von Komponenten (D1) und (D2) ein Organopolysiloxan, das mindestens 1 Alkenylgruppe pro Molekül aufweist und das keine Fluoralkylgruppen aufweist oder das Fluoralkylgruppen in einem Anteil von weniger als 20 Mol- % aller Siliciumatom-gebundenen organischen Gruppen aufweist; und
(E) eine wirksame Menge eines Härtungsmittels, und
(2') Härten einer Fluorsiliconkautschukzusammensetzungsschicht und einer Siliconkautschukzusammensetzungsschicht eines Laminats, das in vorhergehendem Schritt (1') produziert wird.

8. Verfahren zum Herstellen eines Laminats nach Anspruch 7, wobei Komponente (B) ein Organopolysiloxan ist, das durch die durchschnittliche Einheitsformel dargestellt wird:
[HR¹₂SiO_{1/2}]ₓ(R^{f}SiO_{3/2})_{y}
wobei R¹ die gleiche oder eine unterschiedliche einwertige Kohlenwasserstoffgruppe ist, die 1 bis 20 Kohlenstoffatome ohne aliphatische ungesättigte Bindung aufweist, R^{f} die gleiche oder unterschiedliche Fluoralkylgruppe ist, und jedes "x" und "y" eine Zahl ist, die erfüllt: 0 < x < 1, 0 < y < 1 und x + y = 1.

9. Verfahren zum Herstellen eines Laminats nach Anspruch 7, wobei die Siliconkautschukzusammensetzung ferner umfasst: einen feinpulvrigen Siliciumdioxid-basierten Füllstoff in einer Menge von 5 bis 200 Massenteilen hinsichtlich 100 Massenteile von Komponente (A).

## Revendications

1. Composition de caoutchouc de silicone comprenant les composants (A) à (C) suivants :
(A) 100 parties en masse d'un organopolysiloxane ayant au moins 2 groupes alcényle par molécule, et n'ayant aucun groupe fluoroalkyle ou ayant des groupes fluoroalkyle en une proportion inférieure à 20 % en moles de tous les groupes organiques liés à un atome de silicium ;
(B) un organopolysiloxane ayant au moins 2 atomes d'hydrogène liés à un atome de silicium par molécule conjointement avec des groupes fluoroalkyle en une proportion d'au moins 5 % en moles de tous les groupes organiques liés à un atome de silicium, en une quantité telle que les atomes d'hydrogène liés à un atome de silicium dans le composant (B) dépassent 1 mol par rapport à 1 mol de l'ensemble des groupes alcényle dans le composant (A) ; et
(C) un catalyseur de réaction d'hydrosilylation en une quantité catalytique.

2. Composition de caoutchouc de silicone selon la revendication 1, dans laquelle le composant (B) est un organopolysiloxane représenté par la formule unitaire moyenne :
[HR¹₂SiO_{1/2}]ₓ(R^{f}SiO_{3/2})_{y}
dans laquelle R¹ est le groupe hydrocarboné monovalent identique ou différent ayant 1 à 20 atomes de carbone sans liaison aliphatique insaturée, R^{f} est le groupe fluoroalkyle identique ou différent, et chaque « x » et « y » est un nombre satisfaisant à : 0 < x < 1, 0 < y < 1, et x + y = 1.

3. Composition de caoutchouc de silicone selon la revendication 1, comprenant en outre : une charge à base de silice pulvérulente fine, en une quantité de 5 à 200 parties en masse par rapport 100 parties en masse de composant (A).

4. Procédé de fabrication d'un stratifié d'un caoutchouc de fluorosilicone et d'un caoutchouc de silicone, comprenant les étapes (1) à (3) suivantes :
(1) le durcissement d'une composition de caoutchouc de silicone comprenant les composants (A) à (C) suivants :
(A) 100 parties en masse d'un organopolysiloxane ayant au moins 2 groupes alcényle par molécule, et n'ayant aucun groupe fluoroalkyle ou ayant des groupes fluoroalkyle en une proportion inférieure à 20 % en moles de tous les groupes organiques liés à un atome de silicium ;
(B) un organopolysiloxane ayant au moins 2 atomes d'hydrogène liés à un atome de silicium par molécule conjointement avec des groupes fluoroalkyle en une proportion d'au moins 5 % en moles de tous les groupes organiques liés à un atome de silicium, en une quantité telle que les atomes d'hydrogène liés à un atome de silicium dans le composant (B) dépassent 1 mol par rapport à 1 mol de l'ensemble des groupes alcényle dans le composant (A) ; et
(C) un catalyseur de réaction d'hydrosilylation en une quantité catalytique,
(2) la stratification d'une composition de caoutchouc de fluorosilicone comprenant les composants (D) et (E) suivants sur une surface d'un caoutchouc de silicone produit dans l'étape (1) ci-dessus :
(D) 100 parties en masse de (D1) un organopolysiloxane ayant au moins 1 groupe alcényle par molécule conjointement avec des groupes fluoroalkyle en une proportion d'au moins 20 % en moles de tous les groupes organiques liés à un atome de silicium, ou un mélange de composants (D1) et (D2) un organopolysiloxane ayant au moins 1 groupe alcényle par molécule, et n'ayant aucun groupe fluoroalkyle ou ayant des groupes fluoroalkyle en une proportion inférieure à 20 % en moles de tous les groupes organiques liés à un atome de silicium ; et
(E) une quantité efficace d'un agent de durcissement, et
(3) le durcissement de la composition de caoutchouc de fluorosilicone stratifiée dans l'étape (2) ci-dessus.

5. Procédé de fabrication d'un stratifié selon la revendication 4, dans lequel le composant (B) est un organopolysiloxane représenté par la formule unitaire moyenne :
[HR¹₂SiO_{1/2}]ₓ(R^{f}SiO_{3/2})_{y}
dans laquelle R¹ est le groupe hydrocarboné monovalent identique ou différent ayant 1 à 20 atomes de carbone sans liaison aliphatique insaturée, R^{f} est le groupe fluoroalkyle identique ou différent, et chaque « x » et « y » est un nombre satisfaisant à : 0 < x < 1, 0 < y < 1, et x + y = 1.

6. Procédé de fabrication d'un stratifié selon la revendication 4, dans lequel la composition de caoutchouc de silicone comprend en outre : une charge à base de silice pulvérulente fine, en une quantité de 5 à 200 parties en masse par rapport à 100 parties en masse de composant (A).

7. Procédé de fabrication d'un stratifié d'un caoutchouc de fluorosilicone et d'un caoutchouc de silicone, comprenant les étapes (1') à (2') suivantes :
(1') la production d'un stratifié d'une couche de composition de caoutchouc de fluorosilicone et d'une couche de composition de caoutchouc de silicone en stratifiant une composition de caoutchouc de fluorosilicone comprenant les composants (A) à (C) suivants :
(A) 100 parties en masse d'un organopolysiloxane ayant au moins 2 groupes alcényle par molécule, et n'ayant aucun groupe fluoroalkyle ou ayant des groupes fluoroalkyle en une proportion inférieure à 20 % en moles de tous les groupes organiques liés à un atome de silicium ;
(B) un organopolysiloxane ayant au moins 2 atomes d'hydrogène liés à un atome de silicium par molécule conjointement avec des groupes fluoroalkyle en une proportion d'au moins 5 % en moles de tous les groupes organiques liés à un atome de silicium, en une quantité telle que les atomes d'hydrogène liés à un atome de silicium dans le composant (B) dépassent 1 mol par rapport à 1 mol de l'ensemble des groupes alcényle dans le composant (A) ; et
(C) un catalyseur de réaction d'hydrosilylation en une quantité catalytique, et une composition de caoutchouc de fluorosilicone comprenant les composants (D) et (E) suivants :
(D) 100 parties en masse de (D1) un organopolysiloxane ayant au moins 1 groupe alcényle par molécule conjointement avec des groupes fluoroalkyle en une proportion d'au moins 20 % en moles de tous les groupes organiques liés à un atome de silicium, ou un mélange de composants (D1) et (D2) un organopolysiloxane ayant au moins 1 groupe alcényle par molécule, et n'ayant aucun groupe fluoroalkyle ou ayant des groupes fluoroalkyle en une proportion inférieure à 20 % en moles de tous les groupes organiques liés à un atome de silicium ; et
(E) une quantité efficace d'un agent de durcissement, et
(2') le durcissement d'une couche de composition de caoutchouc de fluorosilicone et d'une couche de composition de caoutchouc de silicone d'un stratifié produit à l'étape (1') ci-dessus.

8. Procédé de fabrication d'un stratifié selon la revendication 7, dans lequel le composant (B) est un organopolysiloxane représenté par la formule unitaire moyenne :
[HR¹₂SiO_{1/2}]ₓ(R^{f}SiO_{3/2})_{y}
dans laquelle R¹ est le groupe hydrocarboné monovalent identique ou différent ayant 1 à 20 atomes de carbone sans liaison aliphatique insaturée, R^{f} est le groupe fluoroalkyle identique ou différent, et chaque « x » et « y » est un nombre satisfaisant à : 0 < x < 1, 0 < y < 1, et x + y = 1.

9. Procédé de fabrication d'un stratifié selon la revendication 7, dans lequel la composition de caoutchouc de silicone comprend en outre : une charge à base de silice pulvérulente fine, en une quantité de 5 à 200 parties en masse par rapport à 100 parties en masse de composant (A).
